# EUROPEAN PATENT APPLICATION

(11) **EP 2 113 704 A1**
(43) Date of publication of application: **04.11.2009**
(21) Application number: 08008263.9
(22) Date of filing: 30.04.2008
(51) Int. Cl.: F16L 25/00, F16L 37/091, F16L 37/098, E04G 15/06

(54) **Connecting joint for corrugated pipes**

(71) Applicant: Yea der Lih Enterprise Co., Ltd., Kao Hsiung County (TW)
(72) Inventor: Tsai, Tzu-Liang, Kang Shan Town Kao Hsiung County (TW)
(74) Representative: Kador & Partner

(57) **Abstract**

A fast-connecting joint (3,4) for corrugated pipes includes a main body (3) and an engaging member (4). The main body (3) has a through hole (30) for liquid to flow through, and an inner recessed annular wall (31) provided with an annular slope (310) close to one end of the main body (3). The engaging member (4) possesses an outer annular wall (40), and plural flexible curved petals (41) extending outward around one end of the outer annular wall (40) and respectively having a projection (411) on their outer surface. In assembly, the engaging member (4) is inserted in the through hole (30) of the main body (3), with the projections (411) of the engaging member (4) correspondingly fitted against the inner recessed annular wall. In using, a corrugated pipe (5) can be quickly fastened with the fast-connecting joint tightly when it is inserted into the engaging member (4) to keep its annular groove (51) blocked by the curved petals (41).

## Description

### BACKGROUND OF THE INVENTION

### 1. Field of the Invention

This invention relates to a fast-connecting joint for corrugated pipes, particularly to one having its main body provided with an inner recessed annular wall, which is provided with an annular slope for mutually combined with projections of curved petals of an engaging member. When a corrugated pipe is quickly inserted in the engaging member and locked by the curved petals, it is strongly fastened with the fast-connecting joint, as the connection is to be tightened more and more if the corrugated pipe is continuously pulled outward by force.

### 2. Description of the Prior Art

As disclosed in a Taiwan patent No.545543 "Connecting tube for corrugated pipes", a first conventional connecting tube for corrugated pipes is provided with a main body and a locking member mounted on an outer surface of the main body, enabling an engaging gap formed between the main body and the locking member at two ends of the main body so that one end of a corrugated pipe can correspondingly and tightly fits in the engaging gap, with the locking member kept fixedly in one of plural annular grooves of the corrugated pipe, finishing assembly of the corrugated pipe with the connecting tube.

However, it has disadvantages that the locking member is mounted around on the outer surface of the two end sections of main body, so the outer diameter of the main body is such enlarged to cost a little more. Moreover, if plural little corrugated pipes are to be inserted in a big one to be combined with the connecting tube, the locking member will become an obstacle for such an operation. Secondly, in order to keep the locking member effectively elastic, the locking member cannot be too thick to have elasticity; but, on the contrary, with an insufficient thickness, the locking member is apt to get broken.

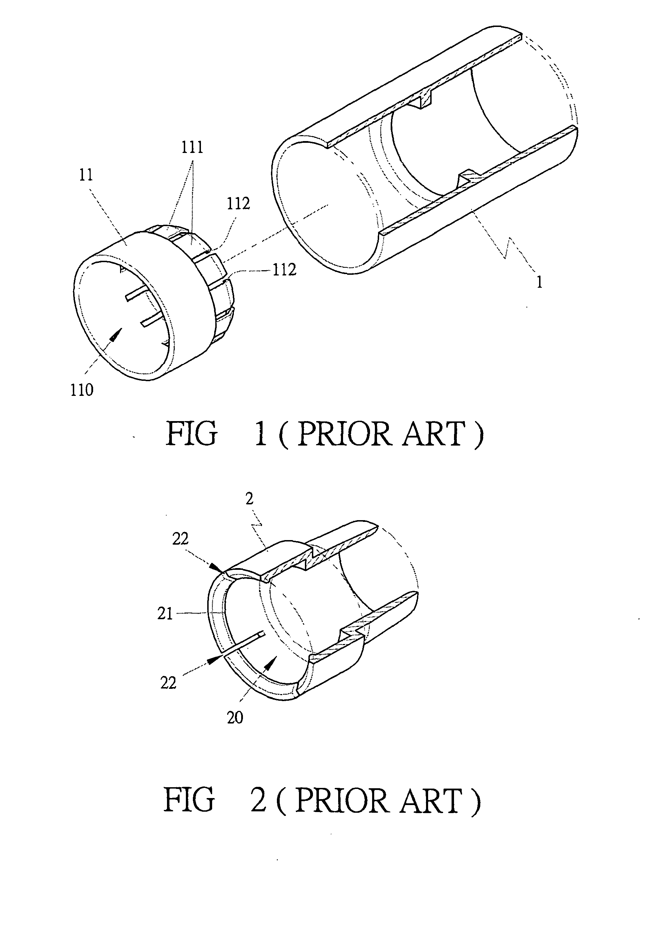

A second conventional connecting tube for corrugated pipes, as shown in Fig. 1, includes a main body 1 provided with a through hole 10 for an engaging tubular member 11 to fit tightly therein for liquid to flow through. The engaging tubular member 11 is formed integrally, provided with a through hole 110, a plurality of petal-shaped locking members 111 formed continually around its rear portion, and a tapered end 112 extending outward from each locking members 111 for tightly fitting with an end of a corrugated pipe. As the main body 1 and the engaging tubular member 11 are independently made and have to be combined together by glue, the manufacturing cost is undoubtedly increased.

And, as shown in Figs. 2 ∼ 4, a third, a fourth and a fifth conventional connecting tubes for corrugated pipes commonly include a main body 2 provided with a through hole 20 and an engaging member 21 is integrally shaped together with and in the main body 2, with plural lengthwise gaps 22 formed both in the main body 2 and the engaging member 21. However, in constructing a building, when concrete is pumped upon a corrugated pipe jointed with the connecting tube 2, the damp concrete may permeate into the connecting tube 2 through the gap 22, possible to keep the wire inside the corrugated pipe badly affected by the humidity.

Moreover, a Taiwan patent of No. 093123761 titled "QUICK-TO-CONNECT JOINT FOR FLEXIBLE HOSES" disclosed by this inventor is mainly provided with a main body formed integrally, and plural elastic locking petals similar to those in this invention. But, it is still not so suitable for diverse environments and requirements.

### SUMMARY OF THE INVENTION

The object of this invention is to offer a fast-connecting joint for corrugated pipes.

The main characteristics of the invention are described as below.
1. The fast-connecting joint for corrugated pipes includes a main body provided with a through hole and an inner recessed annular wall possessing an annular slope.
2. The fast-connecting joint for corrugated pipes also includes an engaging member that is provided with an outer annular wall and a plurality of flexible curved petals extending outward around one side of the outer annular wall and respectively having a projection on their outer surface, so that a corrugated pipe can be quickly and stably locked by the engaging member of the fast-connecting joint.
3. While a corrugated pipe is locked by the engaging member, it is to be tightened more and more with the fast-connecting joint if continuously pulled by any force, instead of being drawn off.

### BRIEF DESCRIPTION OF DRAWINGS

This invention is better understood by referring to the accompanying drawings, wherein:
Fig. 1 is an exploded perspective view of a second conventional connecting tube for corrugated pipes;
Fig. 2 is a partial perspective view of a third conventional connecting tube for corrugated pipes;

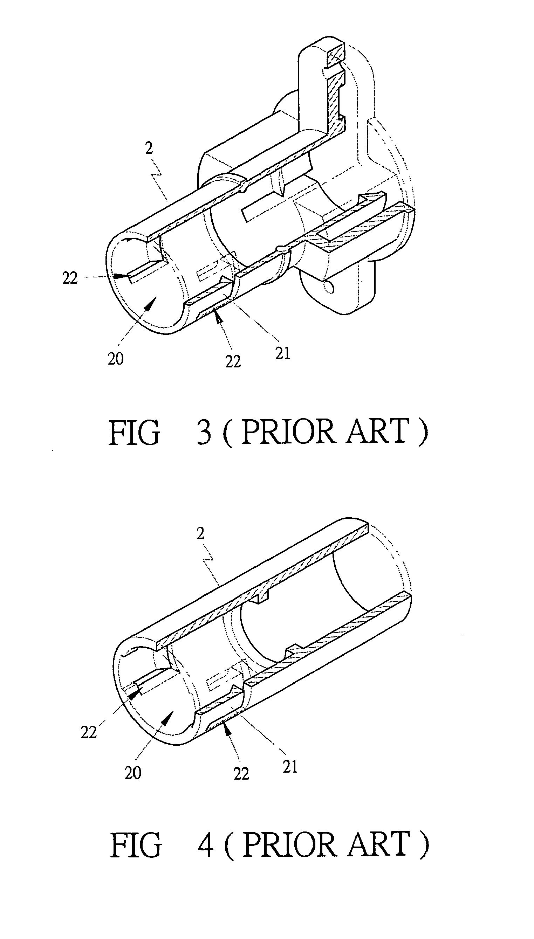

Fig. 3 is a partial perspective view of a fourth conventional connecting tube for corrugated pipes;
Fig. 4 is a partial perspective view of a fifth conventional connecting tube for corrugated pipes;
Fig. 5 is a side cross-sectional view of a first preferred embodiment of a fast-connecting joint for corrugated pipes in the present invention;
Fig. 6 is a side cross-sectional view of the first preferred embodiment of a fast-connecting joint for corrugated pipes in the present invention, showing assembly of a main body and an engaging member;
Fig. 7 is a front view of the engaging member of the first preferred embodiment of a fast-connecting joint for corrugated pipes in the present invention;
Fig. 8 is a cross-sectional view of an "A-A" line in Fig. 7;
Fig. 9 is an exploded perspective view of the first preferred embodiment of a fast-connecting joint for corrugated pipes in the present invention;
Fig. 10 is a side cross-sectional view of the first preferred embodiment of a fast-connecting joint for corrugated pipes in the present invention, showing it being jointed with a corrugated pipe;
Fig. 11 is another side cross-sectional view of the first preferred embodiment of a fast-connecting joint for corrugated pipes in the present invention, showing it being jointed with a corrugated pipe;
Fig. 12 is an exploded perspective view of a second preferred embodiment of a fast-connecting joint for corrugated pipes in the present invention;
Fig. 13 is a front view of the engaging member of a third preferred embodiment of a fast-connecting joint for corrugated pipes in the present invention;
Fig. 14 is a front view of the engaging member of a fourth preferred embodiment of a fast-connecting joint for corrugated pipes in the present invention;
Fig. 15 is a front view of the engaging member of a fifth preferred embodiment of a fast-connecting joint for corrugated pipes in the present invention;
Fig. 16 is an exploded perspective view of a sixth preferred embodiment of a fast-connecting joint for corrugated pipes in the present invention;
Fig. 17 is a front view of a seventh preferred embodiment of a fast-connecting joint for corrugated pipes in the present invention; and
Fig. 18 is a cross-sectional view of a "B-B" line in Fig. 7.

### DETAILED DESCRIPTION OF THE PREFERRED EMBODIMENT

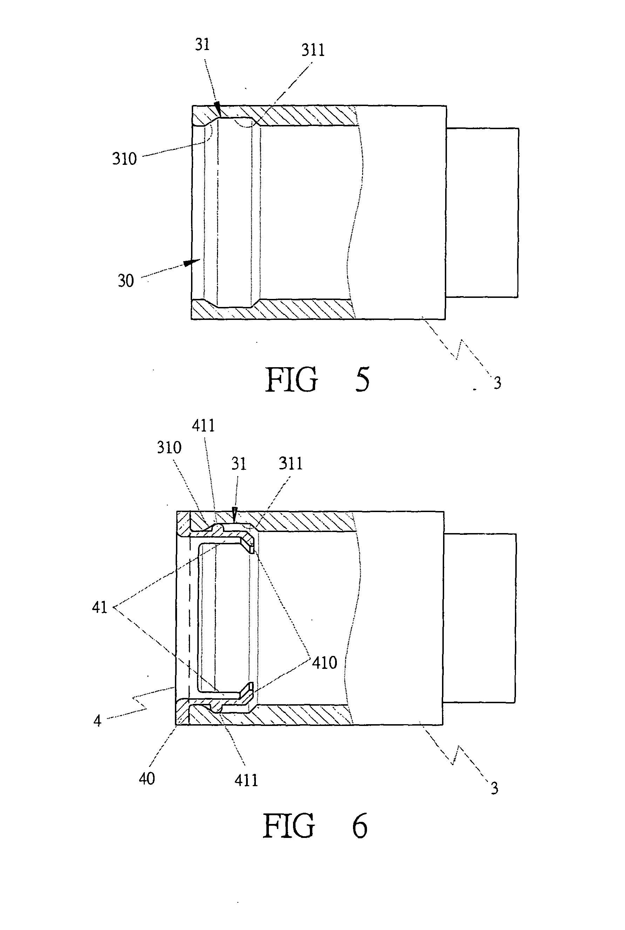

As shown in Figs. 5 ∼ 12, a first preferred embodiment of a fast-connecting joint for corrugated pipes in the present invention is composed of a main body 3 and an engaging member 4.

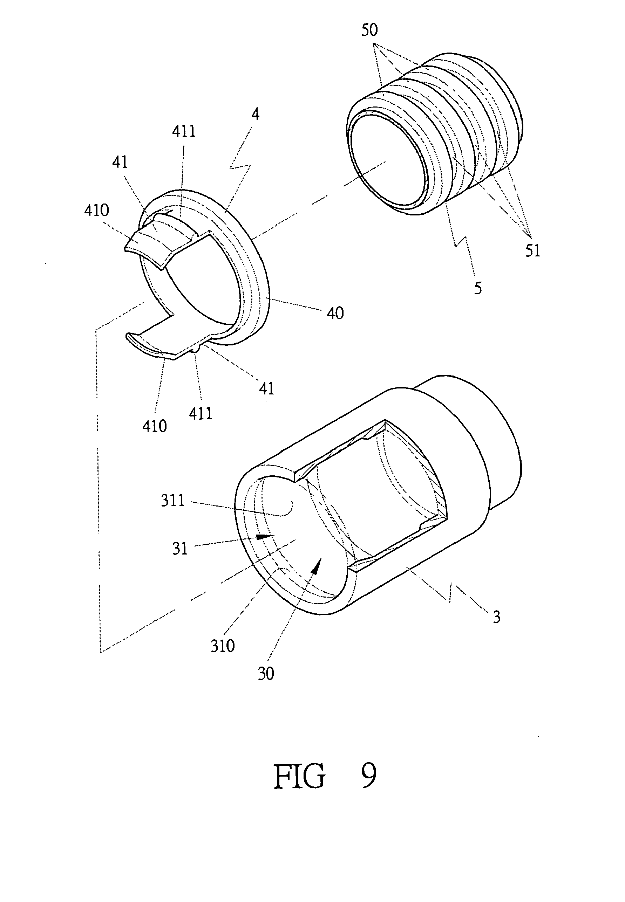

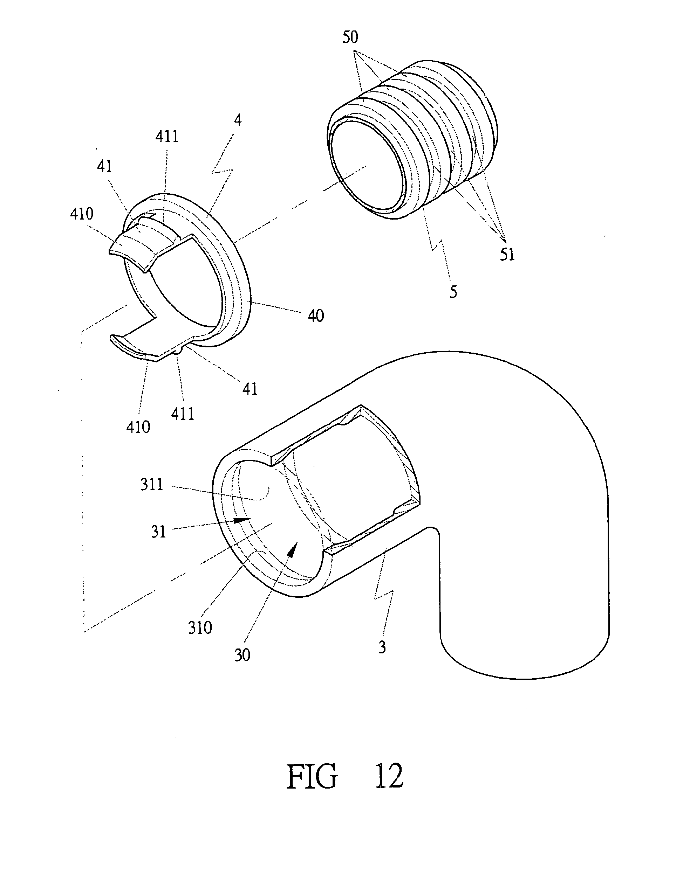

The main body 3 can be made into any shape, such as a straight tube shown in Fig. 9, a right-angular tube shown in Fig. 12 or a tube bent with diverse angles, a crossed one or a T-shaped one, provided with a through hole 30 for liquid to flow through, and an inner recessed annular wall 31 formed inside it. The inner recessed annular wall 31 includes an annular slope 310 and an annular surface 311, with the annular slope 310 located closer to one end of the main body 3.

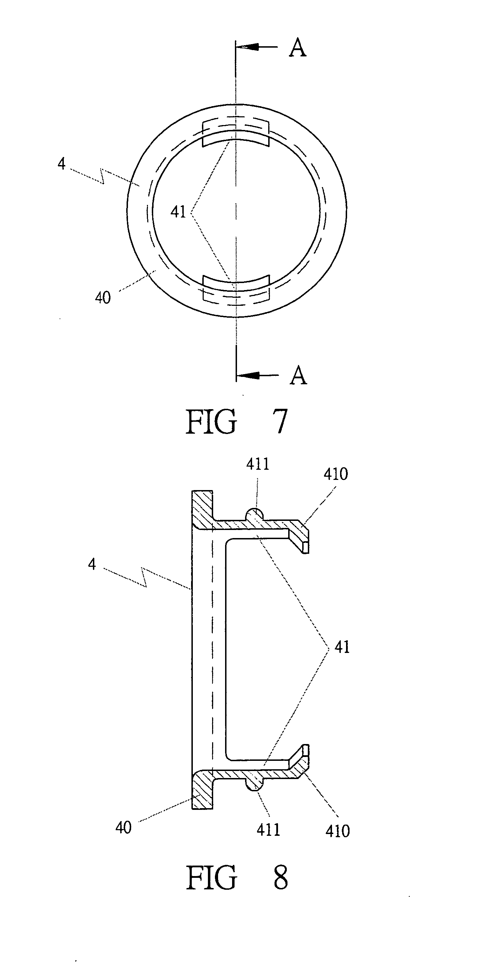

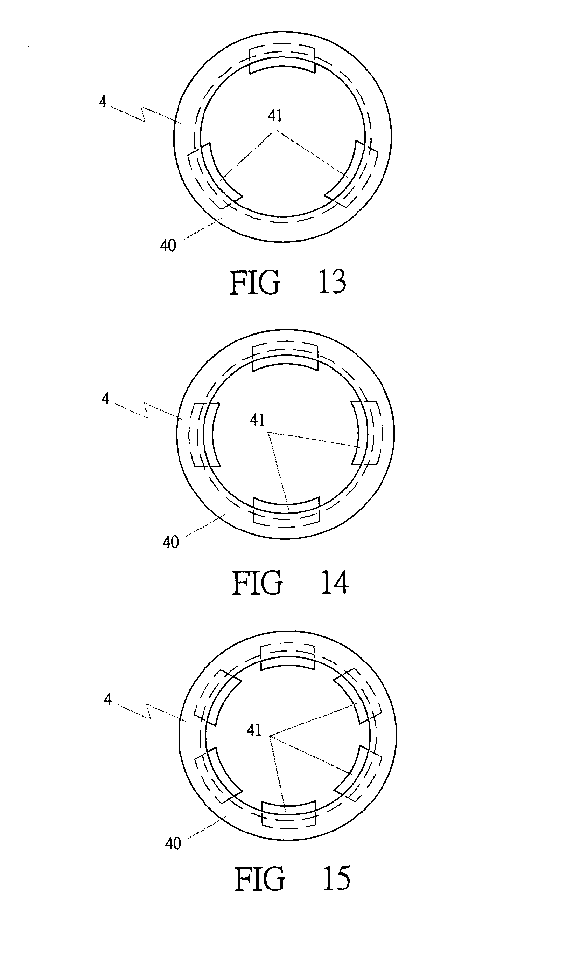

The engaging member 4, as shown in Figs. 6 ∼ 9, is provided with an outer annular wall 40, and plural flexible curved petals 41 extending outward from one side of the annular surface 40 and equidistantly spaced apart. The engaging member 4 has two, three, four or six curved petals 41, as respectively shown in Figs. 7, 13, 14 and 15. Of course, if a single curved petal 41 can work as well as plural ones do, it is not excluded from the invention. Each of the petals 41 is provided with a bent end 410 extending toward the central line of the engaging member 4, and an annular projection 411 positioned on its outer surface.

In assembling, it needs just to insert the curved petals 41 of the engaging member 4 into the through hole 30 of the main body 3. That is, due to the shape of the bent portions 410, the curved petals 41 can be flexibly pushed into the inner recessed annular wall 31 of the main body 3, as shown in Fig. 6, with the outer annular wall 40 of the engaging member 4 contacting against an end of the main body 3, thus finishing the assembly of the fast-connecting joint.

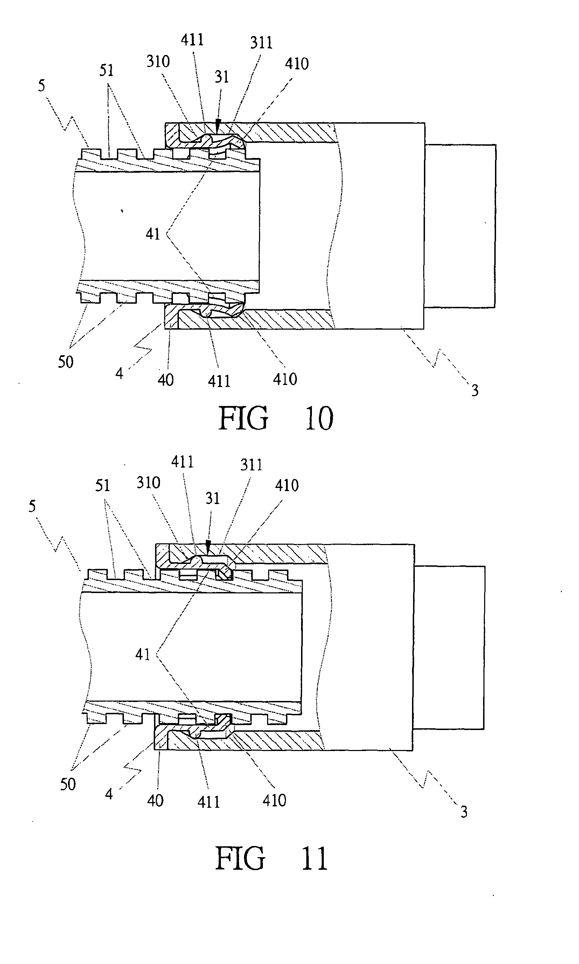

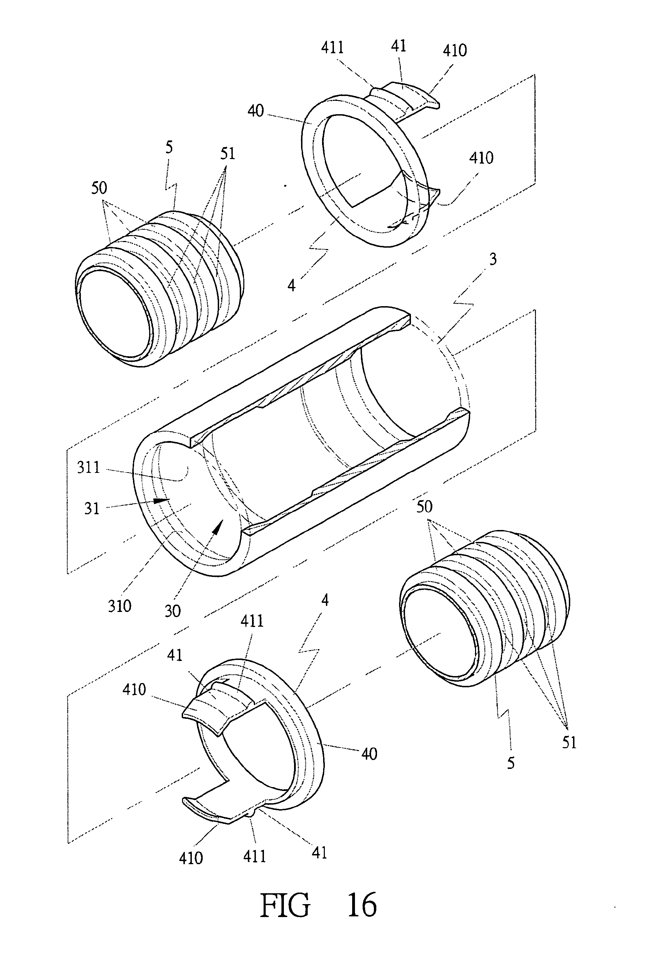

In using, a user can intrude a corrugated pipe 5 into the main body 3 from the engaging member 4. The main body 3 can be accordingly assembled with one of two engaging members 4, as shown in Fig. 16. By the time, the curved petals 41 of the engaging member 4 are first to be squeezed by projected annular knots 50 of the corrugated pipe 5 to move toward the annular surface 311 of the inner recessed annular wall 31, as shown in Fig. 10; then, after being passed over by the projected annular knots 50, the curved petals 41 will elastically move back to their original position to lock in an annular groove 51 of the corrugated pipe 5, as shown in Fig. 11, keeping the corrugated pipe 5 unable to be pulled out unless breaking the fast-connecting joint.

Again, as shown in Fig. 11, if the corrugated pipe 5 having being locked by the curved petals 41 is pulled outward by force, it is to be tightened more and more with the curved petals 41 as the projections 411 of the curved petals 41 are more tightly blocked by the annular slope 310 of the main body 3 as long as it is kept on pulled. So, the corrugated pipe 5 cannot be pulled off the fast-connecting joint by any unintended force.

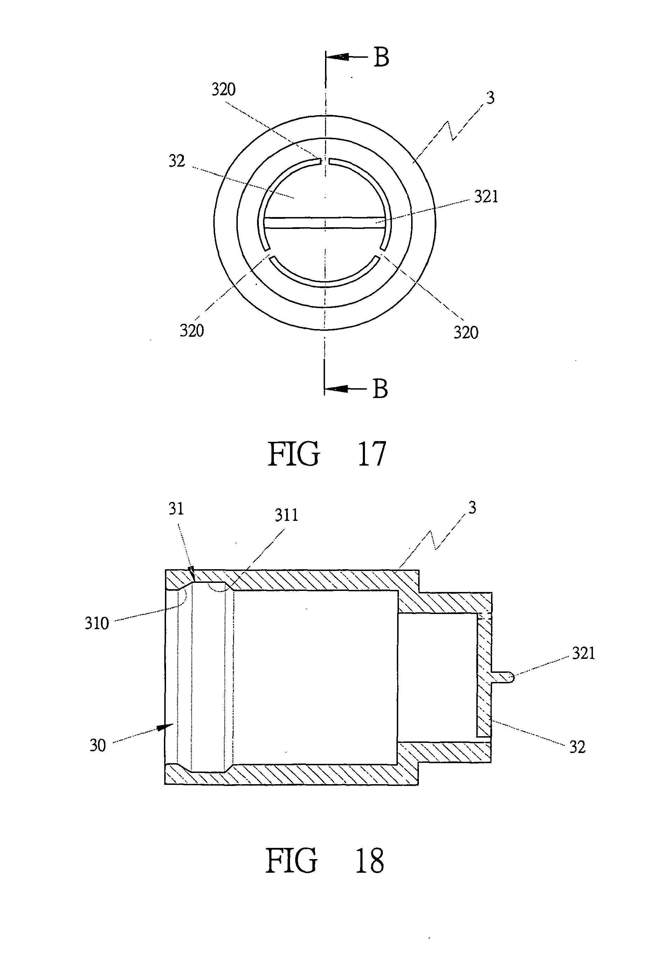

In addition, as shown in Figs. 17 and 18, a seventh preferred embodiment of a fast-connecting joint for corrugated pipes in the present invention has the main body 3 additionally provided with a sealing cover 32 integrally formed at one end with the through hole 30. The sealing cover 32 is provided with a plurality of ribs 320 connected to the inner wall of the main body 3. With the sealing cover 32, concrete or other contaminants can be prevented from entering the fast-connecting joint when the fast-connecting joint in advance installed in a junction box is buried by concrete while a building is being constructed. Moreover, the sealing cover 32 is also provided with a pulling portion 321 formed on its outside for being pulled to draw the sealing cover 32 off the main body 3 after finishing pouring concrete, so as to enable the fast-connecting joint opened for wires to pass through.

While the preferred embodiment of the invention has been described above, it will be recognized and understood that various modifications may be made therein and the appended claims are intended to cover all such modifications that may fall within the spirit and scope of the invention.

## Claims

1. A fast-connecting joint for corrugated pipes, said joint comprising:
a main body provided with a through hole for liquid to flow through, an inner recessed annular wall formed inside said main body and provided with an annular slope and an annular surface adjacent to each other;
an engaging member provided with an outer annular wall, plural flexible curved petals located around an inner end of said outer annular wall and provided with a bent portion formed at its end, a projection positioned on an outer surface of said petals.

2. The fast-connecting joint for corrugated pipes as claimed in Claim 1, wherein said engaging member is provided with only one said petal.

3. The fast-connecting joint for corrugated pipes as claimed in Claim 1, wherein said main body is provided with a sealing cover integrally formed together and connected with said main body by plural ribs, and a pulling member formed on an outer surface of said sealing cover.
